# EUROPEAN PATENT SPECIFICATION

(11) **EP 3 955 344 B1**
(45) Date of publication and mention of the grant of the patent: **07.02.2024**
(21) Application number: 21770478.2
(22) Date of filing: 22.03.2021
(51) Int. Cl.: H01M 4/36, H01M 4/525, H01M 4/505, H01M 4/62, H01M 10/052

(54) **POSITIVE ELECTRODE ACTIVE MATERIAL FOR SECONDARY BATTERY AND LITHIUM SECONDARY BATTERY COMPRISING SAME**
POSITIVELEKTRODENAKTIVMATERIAL FÜR EINE SEKUNDÄRBATTERIE UND LITHIUMSEKUNDÄRBATTERIE DAMIT
MATÉRIAU ACTIF D'ÉLECTRODE POSITIVE POUR BATTERIE SECONDAIRE ET BATTERIE SECONDAIRE AU LITHIUM LE COMPRENANT

(30) Priority: 20.03.2020 KR 20200034557
(43) Date of publication of application: 16.02.2022
(73) Proprietor: LG CHEM, LTD., Yeongdeungpo-gu, Seoul 07336 (KR)
(72) Inventor: KWAK, No Woo, Daejeon 34122 (KR); LEE, Hyuck, Daejeon 34122 (KR); MOK, Duck Gyun, Daejeon 34122 (KR); SON, Min Hee, Daejeon 34122 (KR)
(74) Representative: Hoffmann Eitle
(86) International application number: PCT/KR2021/003466
(87) International publication number: WO 2021/187961

(56) References cited:
- EP-A1- 3 686 970
- JP-A- 2019 114 323
- KR-A- 20060 105 909
- KR-A- 20110 063 335
- KR-A- 20170 075 596
- KR-A- 20180 064 196
- KR-A- 20190 078 720
- US-A1- 2012 082 891
- US-A1- 2018 254 477
- US-A1- 2021 036 318

## Description

### [Technical Field]

The present invention relates to a positive electrode active material for a secondary battery and a lithium secondary battery including the same.

### [Background Art]

With the recent rapid spread of electronic devices using a battery, such as mobile phones, laptop computers, electric vehicles, and the like, the demand for small, lightweight, and relatively-high-capacity secondary batteries is rapidly increasing. In particular, lithium secondary batteries have light weight and high energy density and thus have attracted attention as a driving power source for portable electronic devices. Accordingly, there have been active research and development efforts to enhance the performance of lithium secondary batteries.

The lithium secondary batteries, in which an organic electrolyte or a polymer electrolyte is filled between a positive electrode and a negative electrode formed of an active material capable of the intercalation and deintercalation of lithium ions, produce electrical energy through reduction and oxidation reactions occurring when lithium ions are intercalated into or deintercalated from the positive electrode and the negative electrode.

As the positive electrode active materials for the lithium secondary batteries, lithium cobalt oxide (LiCoO₂), lithium nickel oxide (LiNiO₂), lithium manganese oxide (LiMnO₂, LiMn₂O₄, or the like), a lithium iron phosphate compound (LiFePO₄), and the like have been used. Among these, lithium cobalt oxide (LiCoO₂) having a high operating voltage and excellent capacity characteristics is widely used, and has been applied as a positive electrode active material for high voltage applications. However, due to the price increase and unstable supply of cobalt (Co), lithium cobalt oxide has limitations in mass use as a power source in fields such as electric vehicles, so it is necessary to develop an alternative positive electrode active material.

Accordingly, nickel-cobalt-manganese-based lithium composite transition metal oxides (hereinafter simply referred to as "NCM-based lithium composite transition metal oxides"), in which a part of Co has been replaced with nickel (Ni) and manganese (Mn), have been developed. Recently, there have been research efforts to increase capacity by increasing the Ni content of NCM-based lithium composite transition metal oxides. However, in the case of Ni-rich positive electrode active materials which have a high Ni content, although high capacity can be realized, side reactions such as oxygen desorption and electrolyte oxidation may occur at an interface with an electrolyte during charging, resulting in increased resistance, generation of gas, and degradation of lifetime characteristics.

In addition, lithium secondary batteries for electric vehicles require high-output characteristics, but conventional positive electrode active materials have limitations in terms of realizing the high output characteristics, so there is a continuing demand for the development of a positive electrode active material satisfying high-output characteristics required for electric vehicles. In conventional positive electrode active materials, since electric charges accumulate on the surface of the positive electrode active material due to the slow intercalation/deintercalation of lithium ions during charging and discharging, an electric double layer (EDL) is formed, and since the EDL prevents lithium ions from being smoothly intercalated into or deintercalated from the surface of the positive electrode active material, output characteristics are degraded.

Therefore, there is a need to develop a positive electrode active material having excellent surface stability, excellent resistance characteristics, and high-capacity and high-output characteristics.

### [Related-Art Document]

Korean Patent Publication No. 2011-0063335 describes a positive electrode active material for a lithium secondary battery that comprises: a compound capable of reversible intercalation and de-intercalation of lithium; and a composite coating layer including boron (B) and a metal selected from the group consisting of Zr, Ti, Mg, V, Zn, Mo, Ni, Co and Mn formed on the surface of the compound. The B/metal molar ratio of the coating layer is 0.1-7.0.

EP 3 686 970 A1 describes a positive electrode material for a secondary battery, which includes first and second positive electrode active materials that consist of a lithium composite transition metal oxide including at least two or more transition metals selected from Ni, Co and Mn, and wherein the average particle size (D50) of the first positive electrode active material is two or more times larger than that of the second positive electrode active material, and the first positive electrode active material has a concentration gradient in which at least one of Ni, Co or Mn contained in the lithium composite transition metal oxide has a concentration difference of 1.5 mol% or more between the center and the surface of a particle of the lithium composite transition metal oxide.

US 2021/036318 A1 describes a method of preparing a positive electrode active material that includes mixing a lithium raw material and a nickel-containing transition metal hydroxide precursor containing nickel in an amount of 65 mol % or more based on a total number of moles of transition metals and performing a first heat treatment to prepare a nickel-containing lithium transition metal oxide. The method also includes mixing a boron and carbon-containing raw material and a cobalt-containing raw material with the nickel-containing lithium transition metal oxide to form a mixture, and performing a second heat treatment on the mixture to form a coating material including B and Co on a surface of the lithium transition metal oxide.

US 2018/254477 A1 describes a method of manufacturing a positive electrode material for lithium ion secondary battery that includes the following steps (a) and (b): (a) a positive electrode active material is prepared; and (b) the positive electrode material for lithium ion secondary battery is manufactured by forming a coat on at least a portion of a surface of the positive electrode active material. The coat is formed to satisfy the following (1) to (3): (1) the coat includes a lithium ion conductor and a ferroelectric substance; (2) the ferroelectric substance is dispersed in the lithium ion conductor; and (3) the lithium ion conductor is interposed at least partially between the positive electrode active material and the ferroelectric substance.

KR 2006 0105909 A describes a positive electrode for a secondary battery, characterized in that a ferroelectric material having a particle diameter of 3 µm or less is contained in an amount of 0.1 to 10% by weight based on the total weight of the positive electrode mixture.

### [Disclosure]

### [Technical Problem]

The present invention is directed to providing a positive electrode active material for a lithium secondary battery, in which an electric double layer (EDL) on a surface of the positive electrode active material is offset so that lithium ions can be smoothly intercalated or deintercalated, and thus output characteristics are improved, high-capacity characteristics are secured, and excellent resistance characteristics and surface stability are exhibited.

### [Technical Solution]

One aspect of the present invention provides a positive electrode active material for a secondary battery which includes a composite coating layer formed on a surface of lithium composite transition metal oxide particles, wherein the composite coating layer includes a ferroelectric material and a boron-based oxide containing boron.

### [Advantageous Effects]

According to the present invention, it is possible to provide a positive electrode active material for a lithium secondary battery, in which, since an EDL on a surface of the positive electrode active material is offset due to a composite coating layer including a ferroelectric material and a boron-based oxide formed on a surface of lithium composite transition metal oxide particles, lithium ions can be smoothly intercalated or deintercalated, and thus output characteristics are improved, high-capacity characteristics can be secured, and excellent resistance characteristics and surface stability are exhibited.

### [Description of Drawings]

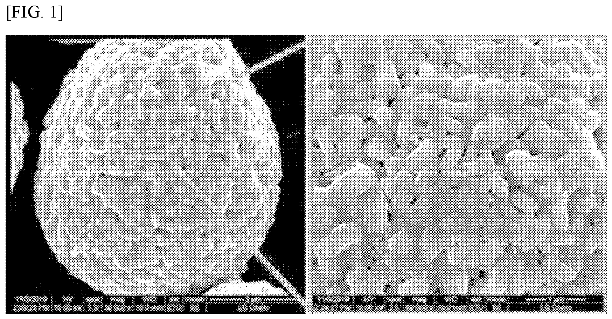

FIG. 1 is an image obtained by observing a surface of a positive electrode active material manufactured in Example 1 with a scanning electron microscope (SEM).

### [Best Mode]

Hereinafter, the present invention will be described in more detail to aid understanding of the present invention.

### <Positive electrode active material for secondary battery>

One aspect of the present invention provides a positive electrode active material for a secondary battery as defined in the appended claims and which includes a composite coating layer formed on a surface of lithium composite transition metal oxide particles, wherein the composite coating layer includes a ferroelectric material and a boron-based oxide containing boron, wherein the lithium composite transition metal oxide is represented by Chemical Formula 4 described below, and wherein the ferroelectric material includes a perovskite structure oxide represented by Chemical Formula 1 described below.

The lithium composite transition metal oxide may be lithium nickel oxide (LiNiO₂). Preferably, the lithium composite transition metal oxide is an NCM-based lithium composite transition metal oxide, which includes Ni, Co, and Mn. The NCM-based lithium composite transition metal oxide is an Ni-rich NCM-based lithium composite transition metal oxide in which the amount of Ni is 60 mol% or more relative to the total amount of metals excluding lithium (Li), wherein the amount of Ni is more preferably 80 mol% or more and even more preferably 85 mol% or more. When the amount of Ni in the NCM-based lithium composite transition metal oxide is 60 mol% or more relative to the total amount of metals excluding Li, the possibility of securing high capacity can increase.

The lithium composite transition metal oxide is represented by the following Chemical Formula 4.

[Chemical Formula 4] LiₐNi_{1-b-c-d}CO_{b}Mn_{c}Q_{d}O_{2+δ}

In Chemical Formula 4, Q is one or more elements selected from the group consisting of Al, Si, B, W, Mo, Mg, V, Ti, Zn, Ga, In, Ru, Nb, Ta, Sn, Sr, La, Ce, Pr, and Zr, and 1.0≤a≤1.5, 0≤b≤0.4, 0≤c≤0.4, 0≤d≤0.1, 0≤b+c+d≤0.4, and -0.1≤δ≤1.0.

In the lithium composite transition metal oxide of Chemical Formula 4, Li is included in an amount corresponding to a, that is, 1.0≤a≤1.5. When a is less than 1.0, capacity may be reduced, and when a exceeds 1.5, since particles are sintered in a firing process, it may be difficult to produce a positive electrode active material. In consideration of a balance between the significant effect of improving the capacity characteristics of a positive electrode active material and sintering ability during the manufacture of the active material according to the control of the Li content, the Li is more preferably included in an amount satisfying 1.05≤a≤1.2.

In the lithium composite transition metal oxide of Chemical Formula 4, Ni is included in an amount corresponding to 1-(b+c+d), for example, 0.6≤1-(b+c+d)≤1. When the lithium composite transition metal oxide of Chemical Formula 4 has a composition in which a Ni content is 0.6 or more, since a sufficient Ni amount for contributing to charging and discharging is secured, capacity can be increased. More preferably, Ni is included in an amount satisfying 0.80≤1-(b+c+d)<1.0.

In the lithium composite transition metal oxide of Chemical Formula 4, Co is included in an amount corresponding to b, that is, 0≤b≤0.4. When the Co content of the lithium composite transition metal oxide of Chemical Formula 4 exceeds 0.4, there is a concern of an increase in costs. In consideration of the significant effect of improving capacity characteristics according to the inclusion of Co, the Co may be more specifically included in an amount satisfying 0.05≤b≤0.2.

In the lithium composite transition metal oxide of Chemical Formula 4, Mn is included in an amount corresponding to c, that is, 0≤c≤0.4. When c of the lithium composite transition metal oxide of Chemical Formula 4 exceeds 0.4, there is a concern that the output characteristics and capacity characteristics of a battery are degraded rather than improved, and more specifically, the Mn may be included in an amount satisfying 0.05≤c≤0.2.

In the lithium composite transition metal oxide of Chemical Formula 4, Q is a doping element included in the crystal structure of the lithium composite transition metal oxide, and Q is included in an amount corresponding to d, that is, 0≤d≤0.1.

The lithium composite transition metal oxide may be secondary particles formed by the aggregation of primary particles or may be single particles in the form of primary particles. In the present invention, "primary particle" refers to a primary structure of a single particle, and "secondary particle" refers to an aggregate, that is, a secondary structure, formed as a result of primary particle agglomeration caused by physical or chemical bonding between primary particles, even without a process for intentional agglomeration or assembly of primary particles forming the secondary particle.

On a surface of the lithium composite transition metal oxide particles, a composite coating layer is formed. The composite coating layer includes a ferroelectric material and a boron-based oxide containing boron. Since the composite coating layer formed according to the present invention offsets an EDL on the surface of lithium composite transition metal oxide particles, lithium ions can be smoothly intercalated or deintercalated, and thus output characteristics can be improved, high-capacity characteristics can be secured, and resistance characteristics and surface stability can be improved.

Subject to the appended claims, the ferroelectric material may be used without limitation as long as it has a spontaneous electric polarization that can be reversed by an external electric field, and the ferroelectric material is preferably a ferroelectric material having a dielectric constant of 10² to 10⁵ and more preferably a ferroelectric material having a dielectric constant of 500 to 4,000. The ferroelectric material includes a perovskite structure oxidewhich is preferable in terms of the magnitude of a dielectric constant.

The perovskite structure oxide is represented by the following Chemical Formula 1.

[Chemical Formula 1] Ba₁₋ₓAₓTi_{1-y}B_{y}O₃

In Chemical Formula 1, A is one or more selected from the group consisting of Pb, Sr, Ca, K, Na, and Cd, B is one or more selected from the group consisting of Sn, Hf, Zr, Ce, Nb, and Th, and 0≤x≤1.0, and 0≤y≤1.0. For example, the perovskite structure oxide may be BaTiO₃, Ba₁₋ₓ₁Srₓ₁TiO₃ (0≤x1≤1.0), SrTiO₃, PbTiO₃, PbZr_{y1}Ti_{1-y1}O₃ (0≤y1≤1.0), KNbO₃, NaNbO₃, or the like.

The ferroelectric material may be included in an amount of 50 to 20,000 ppm, more preferably 100 to 1,000 ppm, and even more preferably 500 to 5,000 ppm based on the total weight of the positive electrode active material. When the content of the ferroelectric material in the composite coating layer is within the above range, since an EDL on the surface of the positive electrode active material is offset, lithium ions can be smoothly intercalated or deintercalated, and thus high-output characteristics can be secured.

The composite coating layer may include a boron-based oxide containing boron in terms of securing high capacity and improving long-term lifetime characteristics (a capacity retention rate and a resistance increase rate). For example, the boron-based oxide may be an amorphous Li-B-O-based compound, or B₂O₃, LiBO₂, Li₃BO₃, Li₄B₂O₅, Li₆B₄O₉, Li₂B₄O₇, Li3B₇O₁₂, LiB₃O₅, Li₃B₁₁O₁₈, or the like.

The boron (B) element of the boron-based oxide may be included in an amount of 50 to 10,000 ppm, more preferably 100 to 3,000 ppm, and even more preferably 300 to 1,500 ppm based on the total weight of the positive electrode active material. When the content of the B element of the boron-based oxide in the composite coating layer is within the above range, higher capacity can be secured, and there may be advantages in terms of long-term lifetime characteristics, such as a decrease in a resistance increase rate and an increase in a capacity retention rate.

Since the composite coating layer includes the ferroelectric material and the boron-based oxide containing boron at the same time, there is an effect of improving high-capacity characteristics, long-term lifetime characteristics, and output characteristics as compared to when individual coating layers of a ferroelectric material and a boron-based oxide containing boron are formed.

The composite coating layer of the present invention may be formed by simultaneously mixing the lithium composite transition metal oxide, the ferroelectric material, and a boron-based oxide coating source containing boron and thermally treating the mixture. Alternatively, the formation of the composite coating layer may involve separate coating processes, where the lithium composite transition metal oxide and the ferroelectric material are mixed and thermally treated, followed by the addition of the boron-based oxide coating source containing boron and thermal treatment, or the lithium composite transition metal oxide and the boron-based oxide coating source containing boron are mixed and thermally treated, followed by the addition of the ferroelectric material and thermal treatment. In this case, the thermal treatment temperature for forming the composite coating layer may be in the range of 100 to 800 °C, more preferably 200 to 600 °C, and even more preferably 250 to 400 °C.

In addition, in one embodiment of the present invention, the positive electrode active material may have a lithium by-product content of 2.0 wt% or less, more preferably 0.1 to 1.0 wt%, and even more preferably 0.2 to 0.5 wt%. When the surface of the positive electrode active material contains a large amount of unreacted lithium by-products, side reactions with an electrolyte may occur, resulting in the generation of gas and a degradation of a lifetime. However, in the positive electrode active material according to one embodiment of the present invention, the content of lithium by-products is 2.0 wt% or less and more preferably 0.5 wt% or less so that side reactions with an electrolyte due to lithium by-products can be reduced, and surface stability can be improved. The amount of the lithium by-products can be reduced by washing the lithium composite transition metal oxide before forming the composite coating layer, but the present invention is not limited thereto.

### <Positive electrode and lithium secondary battery>

Another aspect of the present invention provides a positive electrode for a secondary battery and a lithium secondary battery including the above-described positive electrode material.

Specifically, the positive electrode includes a positive electrode current collector and a positive electrode material layer formed on the positive electrode current collector and including the positive electrode material.

In the positive electrode, the positive electrode current collector is not particularly limited as long as it does not cause a chemical change in a battery and has conductivity, and for example, stainless steel, aluminum, nickel, titanium, calcined carbon, or aluminum or stainless steel whose surface has been treated with carbon, nickel, titanium, silver, or the like may be used. In addition, the positive electrode current collector may typically have a thickness of 3 to 500 µm, and the current collector may have fine irregularities formed in a surface thereof to increase the adhesion of the positive electrode material. The positive electrode current collector may be used in any of various forms such as a film, a sheet, a foil, a net, a porous material, a foam, a non-woven fabric, and the like.

In addition, the positive electrode material layer may include a conductive material and a binder in addition to the above-described positive electrode material.

In this case, the conductive material is used for imparting conductivity to an electrode and can be used without particular limitation as long as it does not cause a chemical change in a battery being manufactured and has electron conductivity. Specific examples thereof include: graphite such as natural graphite or artificial graphite; carbon black such as acetylene black, Ketjen black, channel black, furnace black, lamp black, or thermal black; a carbon-based material such as a carbon fiber; a metal powder or metal fiber such as copper, nickel, aluminum, or silver; a conductive whisker such as zinc oxide or potassium titanate; a conductive metal oxide such as titanium oxide; and a conductive polymer such as a polyphenylene derivative, which may be used alone or in a combination of two or more thereof. The conductive material may be typically included in an amount of 1 to 30 wt% based on the total weight of the positive electrode material layer.

In addition, the binder serves to improve adhesion between the positive electrode material particles and between the positive electrode material and the positive electrode current collector. Specific examples thereof include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM) rubber, a sulfonated-EPDM, styrenebutadiene rubber (SBR), fluororubber, or various copolymers thereof, which may be used alone or in a combination of two or more thereof. The binder may be included in an amount of 1 to 30 wt% based on the total weight of the positive electrode material layer.

The positive electrode may be manufactured according to a conventional method of manufacturing a positive electrode except that the above-described positive electrode material is used. Specifically, the positive electrode may be manufactured by applying a positive electrode mixture, which includes the above-described positive electrode active material and optionally a binder and a conductive material, onto the positive electrode current collector and then drying and roll-pressing the resultant. In this case, the types and contents of the positive electrode material, the binder, and the conductive material are the same as described above.

The solvent may be a solvent commonly used in the art, for example, dimethyl sulfoxide (DMSO), isopropyl alcohol, N-methylpyrrolidone (NMP), acetone, water, or the like, which may be used alone or in a combination of two or more thereof. The usage amount of the solvent is sufficient if it can dissolve or disperse the positive electrode material, the conductive material, and the binder in consideration of the coating thickness of a slurry and a production yield and, at a later point in time, achieve a viscosity capable of exhibiting excellent thickness uniformity when the slurry is applied to manufacture a positive electrode.

Alternatively, the positive electrode may be manufactured by casting the positive electrode mixture on a separate support and laminating a film obtained by delamination from the support on the positive electrode current collector.

According to another embodiment of the present invention, an electrochemical device including the above-described positive electrode is provided. The electrochemical device may specifically be a battery, a capacitor, or the like and may more specifically be a lithium secondary battery.

Specifically, the lithium secondary battery includes the positive electrode, a negative electrode disposed to face the positive electrode, a separator interposed between the positive electrode and the negative electrode, and an electrolyte, and the positive electrode is the same as described above. In addition, the lithium secondary battery may optionally further include: a battery case for accommodating an electrode assembly including the positive electrode, the negative electrode, and the separator; and a sealing member for sealing the battery case.

In the lithium secondary battery, the negative electrode includes a negative electrode current collector and a negative electrode active material layer disposed on the negative electrode current collector.

The negative electrode current collector is not particularly limited as long as it does not cause a chemical change in a battery and has high conductivity, and for example, copper, stainless steel, aluminum, nickel, titanium, calcined carbon, copper or stainless steel whose surface has been treated with carbon, nickel, titanium, silver, or the like, an aluminum-cadmium alloy, or the like may be used. In addition, the negative electrode current collector may typically have a thickness of 3 to 500 µm, and like in the case of the positive electrode current collector, the current collector may have fine irregularities formed in a surface thereof to increase the adhesion of a negative electrode active material. The negative electrode current collector may be used in any of various forms such as a film, a sheet, a foil, a net, a porous material, a foam, a non-woven fabric, and the like.

The negative electrode active material layer includes a negative electrode active material and optionally a binder and a conductive material. For example, the negative electrode active material layer may be prepared by applying a negative electrode mixture including the negative electrode active material and optionally a binder and a conductive material onto the negative electrode current collector and drying the resultant, or by casting the negative electrode mixture on a separate support and laminating a film obtained by delamination from the support on the negative electrode current collector.

As the negative electrode active material, a compound capable of reversible intercalation and deintercalation of lithium may be used. Specific examples of the negative electrode active material include: a carbonaceous material such as artificial graphite, natural graphite, graphitized carbon fiber, or amorphous carbon; a metallic compound capable of alloying with lithium, such as Si, Al, Sn, Pb, Zn, Bi, In, Mg, Ga, Cd, a Si alloy, a Sn alloy, or an Al alloy; a metal oxide capable of doping and dedoping lithium, such as SiO_{β} (0<β<2), SnO₂, vanadium oxide, or lithium vanadium oxide; or a composite including the metallic compound and the carbonaceous material, such as a Si-C composite or a Sn-C composite, which may be used alone or in a combination of two or more thereof. In addition, a lithium metal thin film may be used as the negative electrode active material. In addition, any of low-crystallinity carbon, high-crystallinity carbon, and the like may be used as the carbonaceous material. Representative examples of the low-crystallinity carbon include soft carbon and hard carbon, and representative examples of the high-crystallinity carbon include amorphous, platy, scaly, spherical, or fibrous natural graphite or artificial graphite, Kish graphite, pyrolytic carbon, mesophase pitch-based carbon fiber, meso-carbon microbeads, mesophase pitches, and high-temperature calcined carbon such as petroleum or coal tar pitch-derived cokes and the like.

In addition, the binder and the conductive material may be the same as described above for the positive electrode.

Meanwhile, in the lithium secondary battery, the separator is used for separating the negative electrode and the positive electrode and providing a passage for lithium ion migration, and any separator commonly used in a lithium secondary battery may be used without particular limitation, and in particular, a separator that exhibits low resistance to the migration of electrolyte ions and has an excellent electrolyte impregnation ability is preferred. Specifically, a porous polymer film, for example, a porous polymer film formed of a polyolefin-based polymer such as an ethylene homopolymer, a propylene homopolymer, an ethylene/butene copolymer, an ethylene/hexene copolymer, or an ethylene/methacrylate copolymer or a stacked structure having two or more layers thereof, may be used. In addition, a common porous non-woven fabric, for example, a non-woven fabric made of a high-melting-point glass fiber, a polyethylene terephthalate fiber, or the like, may be used. Also, in order to ensure heat resistance or mechanical strength, a coated separator that includes a ceramic component or polymer material and is optionally in a single-layer or multi-layer structure may be used.

In addition, examples of the electrolyte used in the present invention may include an organic liquid electrolyte, an inorganic liquid electrolyte, a solid polymer electrolyte, a gel-type polymer electrolyte, an inorganic solid electrolyte, a molten-type inorganic electrolyte, and the like which are usable for manufacturing a lithium secondary battery, but the present invention is not limited thereto.

Specifically, the electrolyte may include an organic solvent and a lithium salt.

As the organic solvent, any organic solvent that can serve as a medium through which ions involved in an electrical reaction of a battery can move may be used without particular limitation. Specifically, as the organic solvent, an ester-based solvent such as methyl acetate, ethyl acetate, γ-butyrolactone, or ε-caprolactone, an ether-based solvent such as dibutyl ether or tetrahydrofuran, a ketone-based solvent such as cyclohexanone, an aromatic hydrocarbon-based solvent such as benzene or fluorobenzene, a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC), an alcohol-based solvent such as ethyl alcohol or isopropyl alcohol, a nitrile such as R-CN (R is a C2-C20 hydrocarbon group having a linear, branched, or cyclic structure and may include a double-bonded aromatic ring or an ether bond), an amide such as dimethylformamide, a dioxolane such as 1,3-dioxolane, a sulfolane, or the like may be used. Among these, a carbonate-based solvent is preferable, and a combination of a cyclic carbonate having high ionic conductivity and a high dielectric constant, which is capable of improving the charging/discharging performance of a battery (e.g., EC, PC, etc.), and a linear carbonate-based compound having low viscosity (e.g., EMC, DMC, DEC, etc.) is more preferable. In this case, when the cyclic carbonate and the linear carbonate are mixed in a volume ratio of about 1:1 to about 1:9 and used, the performance of the electrolyte can be excellent.

As the lithium salt, any compound capable of providing lithium ions used in a lithium secondary battery may be used without particular limitation. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, Lil, LiB(C₂O₄)₂, or the like may be used. The lithium salt is preferably used at a concentration within the range of 0.1 to 2.0 M. When the concentration of the lithium salt satisfies this range, since the electrolyte has appropriate conductivity and viscosity, the performance of the electrolyte can be excellent, and the lithium ions can effectively move.

In the electrolyte, in addition to the above-described electrolyte components, one or more additives, for example, a haloalkylene carbonate-based compound (e.g., difluoroethylene carbonate), pyridine, triethyl phosphite, triethanolamine, a cyclic ether, ethylenediamine, n-glyme, hexamethylphosphate triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, aluminum trichloride, and the like may be included for the purpose of enhancing the lifetime characteristics of a battery, suppressing a reduction in battery capacity, enhancing the discharge capacity of a battery, and the like. In this case, the additive may be included in an amount of 0.1 to 5 wt% based on the total weight of the electrolyte.

A secondary battery including the positive electrode material of the present invention stably exhibits excellent discharge capacity, excellent output characteristics, and an excellent capacity retention rate and thus can be usefully applied to portable devices such as mobile phones, laptop computers, and digital cameras and an electric automobile field such as hybrid electric vehicles (HEVs).

Accordingly, still another aspect of the present invention provides a battery module including the above-described lithium secondary battery as a unit cell and a battery pack including the same.

The battery module or the battery pack is applicable as a power source for one or more medium-to-large sized devices selected from among power tools, electric vehicles (EVs), including HEVs and plug-in hybrid electric vehicles (PHEVs), and power storage systems.

### [Modes of the Invention]

Hereinafter, exemplary embodiments of the present invention will be described in detail so that those of ordinary skill in the art can easily implement the present invention.

### Example 1

A lithium composite transition metal oxide powder (D₅₀=10 µm) including Ni, Co, and Mn in a molar ratio of 88:5:7 was mixed with 25 °C distilled water and washed for 15 minutes. After subsequently drying the lithium composite transition metal oxide at 130 °C, BaTiO₃ and H₃BO₃ were added, and the mixture was thermally treated for five hours in an air atmosphere at 300 °C to form a composite coating layer (includes BaTiO₃ and an amorphous Li-B-O-based compound) on a surface of the lithium composite transition metal oxide particles, and thereby a positive electrode active material was obtained. The obtained positive electrode active material included BaTiO₃ at 2,500 ppm, boron (B) at 500 ppm, and lithium by-products at 0.5 wt% or less based on the total weight thereof. BaTiO₃ had a dielectric constant of 10² to 10⁵ as measured over a 10 K temperature range at T_{c} or less.

### Example 2

A positive electrode active material was manufactured in the same manner as in Example 1 except that a composite coating layer was formed so that BaTiO₃ was included at 1,250 ppm.

### Example 3

A positive electrode active material was manufactured in the same manner as in Example 1 except that a composite coating layer was formed by carrying out a first coating process, in which the washed and dried lithium composite transition metal oxide was mixed with H₃BO₃ and thermally treated for five hours at 300 °C in an air atmosphere, and subsequently carrying out a second coating process, in which BaTiO₃ was added and thermally treated for five hours at 300 °C in an air atmosphere.

### Example 4

A positive electrode active material (lithium composite transition metal oxide particles including a composite coating layer (which includes SrTiO₃ and an amorphous Li-B-O-based compound) on a surface thereof) was manufactured in the same manner as in Example 1 except that SrTiO₃ was used instead of BaTiO₃. The manufactured positive electrode active material included SrTiO₃ at 2,500 ppm, boron at 500 ppm, and lithium by-products at 0.5 wt% or less based on the total weight thereof. SrTiO₃ had a dielectric constant of 10² to 6×10³ as measured over a 10 K temperature range at T_{c} or less.

### Comparative Example 1

A positive electrode active material was manufactured in the same manner as in Example 1 except that H₃BO₃ was not added during a coating process.

### Comparative Example 2

A positive electrode active material was manufactured in the same manner as in Example 1 except that BaTiO₃ was not added during a coating process.

### Comparative Example 3

A positive electrode active material was manufactured by mixing the washed and dried lithium composite transition metal oxide with BaTiO₃ and LiOH·H₂O and thermally treating the mixture for five hours at 300 °C in an air atmosphere to form a composite coating layer (which includes BaTiO₃, LiOH, and Li₂CO₃). The manufactured positive electrode active material included BaTiO₃ at 2,500 ppm, Li at 500 ppm, and lithium by-products at 0.5 wt% or less based on the total weight thereof.

### [Experimental Example 1: Observation of positive electrode active material]

An image obtained by observing a surface of the positive electrode active material manufactured in Example 1 with a scanning electron microscope (SEM) is shown in FIG. 1.

Referring to FIG. 1, it can be seen that the surface of a particle is covered with BaTiO₃ particles as well as a boron-based coating layer.

### [Experimental Example 2: Evaluation of lithium secondary battery properties]

Each of the positive electrode active materials manufactured in Examples 1 to 4 and Comparative Examples 1 to 3 was mixed with a carbon black conductive material and a PVDF binder in a weight ratio of 96:2:2 in an NMP solvent to prepare a positive electrode mixture. The positive electrode mixture was applied onto one side of an aluminum current collector, dried at 100 °C, and roll-pressed, and thus a positive electrode was obtained.

Lithium metal was used as a negative electrode.

An electrode assembly was manufactured by interposing a porous polyethylene separator between the positive electrode manufactured as described above and the negative electrode, and after placing the electrode assembly in a case, an electrolyte was injected into the case, and thus a lithium secondary battery was manufactured. In this case, the electrolyte was prepared by dissolving lithium hexafluorophosphate (LiPF₆), at a concentration of 1.0 M, in an organic solvent including EC, EMC, and DEC in a volume ratio of 3:4:3.

Each of the lithium secondary battery half-cells manufactured as thus was subjected to a charging/discharging test, where the cell was charged at 25 °C in the CC/CV mode of 0.1 C until 4.3 V and then discharged with a constant current of 0.1 C until 3.0 V. In this case, charge capacity, discharge capacity, efficiency, and resistance (direct current internal resistance (DCIR)) were measured, and the results are shown in Table 1.

In addition, in order to measure the percentage of discharge capacity retention relative to 0.1 C, the lithium secondary battery half-cells manufactured in the above were charged at 25 °C in the CC/CV mode of 0.1 C until 4.3 V and then discharged with a constant current of 0.1 C until 3.0 V, charged at 0.1 C until 4.3 V and then discharged with a constant current of 0.5 C until 3.0 V, charged at 0.1 C until 4.3 V and then discharged with a constant current of 1.0 C until 3.0 V, charged at 0.1 C until 4.3 V and then discharged with a constant current of 1.5 C until 3.0 V, charged at 0.1 C until 4.3 V and then discharged with a constant current of 2.0 C until 3.0 V, and charged at 0.1 C until 4.3 V and then discharged with a constant current of 5.0 C until 3.0 V. The results are shown in Table 2.

**[Table 1]**

| | Charge capacity (mAh/g) | Discharge capacity (mAh/g) | Efficiency (%) | DCIR (Ω) |
|---|---|---|---|---|
| Example 1 | 229.6 | 213.7 | 93.0 | 16.6 |
| Example 2 | 229.8 | 214.6 | 93.4 | 16.3 |
| Example 3 | 230.1 | 215.2 | 93.5 | 15.8 |
| Example 4 | 229.1 | 213.7 | 93.3 | 16.5 |
| Comparative Example 1 | 225.2 | 204.3 | 90.7 | 20.8 |
| Comparative Example 2 | 230.2 | 213.2 | 92.6 | 17.1 |
| Comparative Example 3 | 224.7 | 203.8 | 90.7 | 21.1 |

**[Table 2]**

| | Percentage of discharge capacity retention relative to 0.1 C (@25 °C) (%) | | | | | |
|---|---|---|---|---|---|---|
| | 0.1 C | 0.5 C | 1.0 C | 1.5 C | 2.0 C | 5.0 C |
| Example 1 | 100 | 93.8 | 90.6 | 88.8 | 87.5 | 57.2 |
| Example 2 | 100 | 93.8 | 90.7 | 88.7 | 87.0 | 54.1 |
| Example 3 | 100 | 93.7 | 90.7 | 88.9 | 87.0 | 56.5 |
| Example 4 | 100 | 93.8 | 90.8 | 88.8 | 87.1 | 55.5 |
| Comparative Example 1 | 100 | 93.5 | 90.4 | 88.4 | 86.0 | 48.6 |
| Comparative Example 2 | 100 | 93.8 | 90.7 | 88.8 | 87.5 | 50.9 |
| Comparative Example 3 | 100 | 93.4 | 90.5 | 88.5 | 86.2 | 48.9 |

Referring to Table 1, in the case of Examples 1 to 4, since a composite coating layer includes a ferroelectric material and a boron-based oxide containing boron at the same time, it can be seen that capacity and efficiency were improved and resistance was decreased as compared to the case of Comparative Example 1 in which a coating including only a ferroelectric material was applied, Comparative Example 2 in which a coating including only boron was applied, or Comparative Example 3 in which a coating including a metal oxide that is neither a ferroelectric material nor boron was applied.

In addition, referring to Table 2, in the case of Examples 1 to 4, it can be seen that high-rate (5.0 C) characteristics were excellent as compared to the case of Comparative Example 1 in which a coating including only a ferroelectric material was applied, Comparative Example 2 in which a coating including only boron was applied, or Comparative Example 3 in which a coating including a metal oxide that is neither a ferroelectric material nor boron was applied, and through this, it was confirmed that output characteristics were improved in the case of Examples 1 to 4.

## Claims

1. A positive electrode active material for a secondary battery, comprising a composite coating layer formed on a surface of lithium composite transition metal oxide particles, wherein the composite coating layer includes a ferroelectric material and a boron-based oxide including boron (B),
wherein the lithium composite transition metal oxide is represented by the following Chemical Formula 4:
[Chemical Formula 4] LiₐNi_{1-b-c-d}Co_{b}Mn_{c}Q_{d}O_{2+δ}
wherein, in Chemical Formula 4, Q is one or more elements selected from the group consisting of Al, Si, B, W, Mo, Mg, V, Ti, Zn, Ga, In, Ru, Nb, Ta, Sn, Sr, La, Ce, Pr, and Zr, and 1.0<a<1.5, 0≤b≤0.4, 0≤c≤0.4, 0≤d≤0.1, 0≤b+c+d≤0.4, and -0.1≤δ≤1.0; and
wherein the ferroelectric material includes a perovskite structure oxide represented by the following Chemical Formula 1:
[Chemical Formula 1] Ba₁₋ₓAₓTi_{1-y}B_{y}O₃,
wherein, in Chemical Formula 1, A is one or more selected from the group consisting of Pb, Sr, Ca, K, Na, and Cd, B is one or more selected from the group consisting of Sn, Hf, Zr, Ce, Nb, and Th, and 0≤x≤1.0, and 0≤y≤1.0.

2. The positive electrode active material of claim 1, wherein the ferroelectric material has a dielectric constant of 10² to 10⁵.

3. The positive electrode active material of claim 1, wherein the ferroelectric material is included in an amount of 50 ppm to 20,000 ppm based on the total weight of the positive electrode active material.

4. The positive electrode active material of claim 1, wherein the element boron (B) of the boron-based oxide is included in an amount of 50 ppm to 10,000 ppm based on the total weight of the positive electrode active material.

5. The positive electrode active material of claim 1, wherein the lithium composite transition metal oxide includes one or more selected from the group consisting of nickel, cobalt, and manganese.

6. The positive electrode active material of claim 1, wherein the lithium composite transition metal oxide includes nickel, cobalt, and manganese, and nickel is included in an amount of 60 mol% or more relative to all metals except lithium.

7. The positive electrode active material of claim 1, wherein the positive electrode active material has a lithium by-product content of 2.0% by weight or less.

8. The positive electrode active material according to any one of claims 1 to 7, wherein the perovskite structure oxide is selected from BaTiO₃, Ba₁₋ₓ₁Srₓ₁TiO₃ where 0≤x1≤1.0, SrTiO₃, PbTiO₃, PbZr_{y1}Ti_{1-y1}O₃ where 0≤y1≤1.0), KNbO₃, or NaNbO₃.

9. The positive electrode active material according to any one of claims 1 to 8, wherein the boron-based oxide is selected from an amorphous Li-B-O-based compound, or is selected from B₂O₃, LiBO₂, Li₃BO₃, Li₄B₂O₅, Li₆B₄O₉, Li₂B₄O₇, Li₃B₇O₁₂, LiBsOs, or Li₃B₁₁O₁₈.

10. A positive electrode for a secondary battery, comprising the positive electrode active material of any one of claims 1 to 9.

11. A lithium secondary battery comprising the positive electrode of claim 10.

## Patentansprüche

1. Aktivmaterial einer positiven Elektrode für eine Sekundärbatterie, umfassend eine Kompositbeschichtungsschicht, die auf einer Oberfläche von Lithium-Übergangsmetall-Mischoxidpartikeln gebildet ist, wobei die Kompositbeschichtungsschicht ein ferroelektrisches Material und ein Oxid auf Borbasis einschließt, das Bor (B) einschließt,
wobei das Lithium-Übergangsmetall-Mischoxid durch die folgende chemische Formel 4 dargestellt ist:
[Chemische Formel 4] LiₐNi_{1-b-c-d}Co_{b}Mn_{c}Q_{d}O_{2+δ}
wobei in der chemischen Formel 4 Q ein oder mehrere Elemente, ausgewählt aus der Gruppe, bestehend aus Al, Si, B, W, Mo, Mg, V, Ti, Zn, Ga, In, Ru, Nb, Ta, Sn, Sr, La, Ce, Pr und Zr, ist und 1,0≤a≤1,5, 0≤b≤0,4, 0≤c≤0,4, 0≤d≤0,1, 0≤b+c+d≤0,4 und -0,1≤δ≤1,0 ist, und
wobei das ferroelektrische Material ein durch die folgende chemische Formel 1 dargestelltes Oxid mit Perowskit-Struktur einschließt:
[Chemische Formel 1] Ba₁₋ₓAₓTi_{1-y}B_{y}O₃
wobei in der chemischen Formel 1 A eines oder mehrere, ausgewählt aus der Gruppe, bestehend aus Pb, Sr, Ca, K, Na und Cd, ist, B eines oder mehrere, ausgewählt aus der Gruppe, bestehend aus Sn, Hf, Zr, Ce, Nb und Th, ist und 0≤x≤1,0 und 0≤y≤1,0 ist.

2. Aktivmaterial einer positiven Elektrode nach Anspruch 1, wobei das ferroelektrische Material eine Dielektrizitätskonstante von 10² bis 10⁵ aufweist.

3. Aktivmaterial einer positiven Elektrode nach Anspruch 1, wobei das ferroelektrische Material in einer Menge von 50 ppm bis 20.000 ppm, bezogen auf das Gesamtgewicht des Aktivmaterials einer positiven Elektrode, eingeschlossen ist.

4. Aktivmaterial einer positiven Elektrode nach Anspruch 1, wobei das Element Bor (B) des Oxids auf Borbasis in einer Menge von 50 ppm mit 10.000 ppm, bezogen auf das Gesamtgewicht des Aktivmaterials einer positiven Elektrode, eingeschlossen ist.

5. Aktivmaterial einer positiven Elektrode nach Anspruch 1, wobei das Lithium-Übergangsmetall-Mischoxid eines oder mehrere, ausgewählt aus der Gruppe, bestehend aus Nickel, Kobalt und Mangan, einschließt.

6. Aktivmaterial einer positiven Elektrode nach Anspruch 1, wobei das Lithium-Übergangsmetall-Mischoxid Nickel, Kobalt und Mangan einschließt und Nickel in einer Menge von 60 mol-% oder mehr, relativ zu allen Metallen mit Ausnahme von Lithium, eingeschlossen ist.

7. Aktivmaterial einer positiven Elektrode nach Anspruch 1, wobei das Aktivmaterial einer positiven Elektrode einen Lithium-Nebenproduktgehalt von 2,0 Gew.-% oder weniger aufweist.

8. Aktivmaterial einer positiven Elektrode gemäß einem der Ansprüche 1 bis 7, wobei das Oxid mit Perowskit-Struktur aus BaTiO₃, Ba₁₋ₓ₁Srₓ₁TiO₃,, worin 0≤x1≤1,0 ist, SrTiO₃, PbTiO₃, PbZr_{y1}Ti_{1-y1}O₃, worin 0≤y1≤1,0 ist), KNbO₃ oder NaNbO₃ ausgewählt ist.

9. Aktivmaterial einer positiven Elektrode gemäß einem der Ansprüche 1 bis 8, wobei das Oxid auf Borbasis aus einer amorphen Verbindung auf Li-B-O-Basis ausgewählt ist oder aus B₂O₃, LiBO₂, Li₃BO₂, Li₄B₂O₅, Li₆B₄O₉, Li₂B₄O₇, Li₃B₇O₁₂, LiB₃O₅ oder Li₃B₁₁O₁₈ ausgewählt ist.

10. Positive Elektrode für eine Sekundärbatterie, umfassend das Aktivmaterial einer positiven Elektrode nach einem der Ansprüche 1 bis 9.

11. Lithiumsekundärbatterie, umfassend die positive Elektrode nach Anspruch 10.

## Revendications

1. Matériau actif d'électrode positive pour une batterie secondaire, comprenant une couche de revêtement composite formée sur une surface de particules d'oxyde de métal de transition composite de lithium, dans lequel la couche de revêtement composite inclut un matériau ferroélectrique et un oxyde à base de bore incluant du bore (B),
dans lequel l'oxyde de métal de transition composite de lithium est représenté par la Formule chimique 4 suivante :
[Formule chimique 4] LiₐNi_{1-b-c-d}Co_{b}Mn_{c}Q_{d}O_{2+δ}
dans lequel, dans la Formule chimique 4, Q est un ou plusieurs éléments choisis dans le groupe consistant en Al, Si, B, W, Mo, Mg, V, Ti, Zn, Ga, In, Ru, Nb, Ta, Sn, Sr, La, Ce, Pr et Zr, et 1,0 ≤ a ≤ 1,5, 0 ≤ b ≤ 0,4, 0 ≤ c ≤ 0,4, 0 ≤ d ≤ 0,1, 0 ≤ b + c + d ≤ 0,4, et -0,1 ≤ δ ≤ 1,0 ; et
dans lequel le matériau ferroélectrique inclut un oxyde à structure pérovskite représenté par la Formule chimique 1 suivante :
[Formule chimique 1] Ba₁₋ₓAₓTi_{1-y}B_{y}O₃,
dans lequel, dans la Formule chimique 1, A est un ou plusieurs choisis dans le groupe consistant en Pb, Sr, Ca, K, Na et Cd, B est un ou plusieurs choisis dans le groupe consistant en Sn, Hf, Zr, Ce, Nb et Th, et 0 ≤ x ≤ 1,0, et 0 ≤ y ≤ 1,0.

2. Matériau actif d'électrode positive selon la revendication 1, dans lequel le matériau ferroélectrique présente une constante diélectrique de 10² à 10⁵.

3. Matériau actif d'électrode positive selon la revendication 1, dans lequel le matériau ferroélectrique est inclus en une quantité de 50 ppm à 20 000 ppm sur la base du poids total du matériau actif d'électrode positive.

4. Matériau actif d'électrode positive selon la revendication 1, dans lequel le bore élémentaire (B) de l'oxyde à base de bore est inclus en une quantité de 50 ppm à 10 000 ppm sur la base du poids total du matériau actif d'électrode positive.

5. Matériau actif d'électrode positive selon la revendication 1, dans lequel l'oxyde de métal de transition composite de lithium inclut un ou plusieurs choisis dans le groupe consistant en nickel, cobalt et manganèse.

6. Matériau actif d'électrode positive selon la revendication 1, dans lequel l'oxyde de métal de transition composite de lithium inclut du nickel, du cobalt et du manganèse, et le nickel est inclus en une quantité de 60 % en moles ou plus par rapport à tous les métaux à l'exception du lithium.

7. Matériau actif d'électrode positive selon la revendication 1, dans lequel le matériau actif d'électrode positive présente une teneur en sous-produit de lithium de 2,0 % en poids ou moins.

8. Matériau actif d'électrode positive selon l'une quelconque des revendications 1 à 7,
dans lequel l'oxyde à structure pérovskite est choisi parmi le BaTiO₃, le Ba₁₋ₓ₁Srₓ₁TiO₃ où 0 ≤ x1 ≤ 1,0, le SrTiO₃, le PbTiO₃, le PbZr_{y1}Ti_{1-y1}O₃ où 0 ≤ y1 ≤ 1,0), le KNbO₃, ou le NaNbO₃.

9. Matériau actif d'électrode positive selon l'une quelconque des revendications 1 à 8,
dans lequel l'oxyde à base de bore est choisi parmi un composé amorphe à base de Li-B-O, ou est choisi parmi le B₂O₃, le LiBO₂, le Li₃BO₃, le Li₄B₂O₅, le Li₆B₄O₉, le Li₂B₄O₇, le Li₃B₇O₁₂, le LiBaOs, ou le Li₃B₁₁O₁₈.

10. Électrode positive pour une batterie secondaire, comprenant le matériau actif d'électrode positive selon l'une quelconque des revendications 1 à 9.

11. Batterie secondaire au lithium comprenant l'électrode positive selon la revendication 10.
